Europäisches Patentamt

European Patent Office

Office européen des brevets

(11) Veröffentlichungsnummer : **0 056 495**
**B1**

(12) ## EUROPÄISCHE PATENTSCHRIFT

(45) Veröffentlichungstag der Patentschrift :
15.05.85

(51) Int. Cl.⁴ : **B 65 D   1/10**, B 29 C  45/44

(21) Anmeldenummer : **81110817.4**

(22) Anmeldetag : **29.12.81**

(54) **Verfahren zur Herstellung eines Dosenunterteils aus Kunststoff im Spritzgussverfahren.**

(30) Priorität : 13.01.81 DE U 8100532

(43) Veröffentlichungstag der Anmeldung :
28.07.82 Patentblatt 82/30

(45) Bekanntmachung des Hinweises auf die Patenterteilung : 15.05.85 Patentblatt 85/20

(84) Benannte Vertragsstaaten :
AT BE CH DE FR LI LU NL

(56) Entgegenhaltungen :
EP-A- 0 027 788
GB-A- 2 046 227
NL-A- 7 607 071
US-A- 3 183 292

(73) Patentinhaber : KAHA Kunststoffwerk Kurt Hädrich
GmbH & Co. KG.
Rathenaustrasse 2
D-6300 Giessen (DE)

(72) Erfinder : Hädrich, Friedhelm
Tannenweg 24
D-6301 Grossen-Linden/Forst (DE)

(74) Vertreter : Gudel, Diether, Dr. et al
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Grosse Eschenheimer Strasse
39
D-6000 Frankfurt am Main 1 (DE)

## Beschreibung

Die Erfindung betrifft ein Verfahren zur Herstellung eines einstückigen Dosenunterteils aus Kunststoff im Spritzgußverfahren, das am Außenrand einen Gewinde- oder Steckabschnitt hat, der gegenüber dem daran nach unten anschließenden Teil des Dosenunterteils über eine Stufe nach innen zurückspringt, die einen glatten Übergang zwischen den Außenflächen des Dosenunterteils sowie eines zugehörigen Deckels ermöglicht.

Derartige Behälter, beispielsweise Dosen für Kosmetika und dergleichen, werden in vorteilhafter Weise im Spritzgußverfahren hergestellt, insbesondere weil dann die Wanddicke durch die beiden Formteile genau kontrolliert werden kann. Eine Herstellung im auch noch möglichen Spritzblasverfahren hat nämlich den Nachteil einer nicht kontrollierten Wandstärke und einer am Außenumfang der Dose sichtbaren Naht, die insbesondere für in der Kosmetik einzusetzende Behälter unerwünscht ist.

Im Spritzgußverfahren hergestellte Kunststoffdosen mit einem Schraub- oder Steckverschluß haben üblicherweise eine große Wandstärke im Bereich von etwa 5 mm, die notwendig ist, um den Steck- oder Gewindeansatz am oberen Ende des Dosenunterteils derart zurückspringen zu lassen, daß der aufgeschraubte oder aufgesteckte Dosendeckel mit seiner Außenwand glatt in die Außenwand des Dosenunterteils übergeht. Ein solcher glatter Übergang ist bei derartigen Dosen häufig gewünscht und insbesondere für die Kosmetikindustrie unabdingbar.

Es gibt auch bereits im Spritzgußverfahren aus einer Spritzgießform mit zusammenfallbarem Kern hergestellte Kunststoffdosen, die eine etwas geringere Wandstärke aufweisen, wobei dann der Innendurchmesser der Wand des Dosenunterteils sich unterhalb des Gewindeteils in einer Ringschulter erweitert, um dadurch den notwendigen Absatz für den Gewinde- oder Steckteil zu schaffen. Der zusammenfallbare Kern der Spritzgießform ist hierbei notwendig, um nach dem Spritzvorgang den Kern aus dem sich verengenden Formstück herausziehen zu können. Dies ist aber nicht nur wegen des zusammenfallbaren Kerns apparativ aufwendig, sondern läßt auch nur begrenzte Zykluszeiten zu. Nach einer längeren Einsatzzeit des Werkzeugs sind im Boden der Dose außerdem Markierungen zwischen den verschiebbaren Teilen des Kerns sichtbar Fernerhin hat ein zusammenfallbarer Kern geringere Standzeiten als ein starrer Kern.

Man hat auch bereits zweistückige Dosenunterteile gefertigt, die aus einer dünnwandigen, glatten äußeren Schale bestehen, in die ein Einsatz eingesetzt ist, der das Gewindeteil aufnimmt. Dies ist aber sehr materialaufwendig und erfordert auch einen zusätzlichen Arbeitsgang beim Zusammenstecken der beiden Dosenunterteile.

Die US-A-3 183 292 beschreibt ein Verfahren zur Herstellung einer Flasche aus einem elastomeren Kunststoff mit Hilfe eines starren Kerns, wobei bei einer ersten Ausführungsform dieses vorbeschriebenen Verfahrens ein becherartiges halteteil in die Form derart eingelegt ist, daß es nach dem Öffnen der Form den Boden und den Wandabschnitt der Flasche umfaßt. Ist die Form geöffnet, so wird ein in den Bodenabschnitt des starren Kerns eingelassener und achsial verschiebbarer Kolben mit einem Druckmedium beaufschlagt, so daß der Kolben sich achsial nach außen um eine derartige Strecke verschiebt, daß bei dieser Verschiebung der gegenüber der Wand verengte Halsabschnitt der gebildeten Flasche über die größer dimensionierten Teile des Kerns geschoben wird, die vorher die Wand der Flasche geformt haben. Das becherartige Halteteil ist hierbei notwendig, um nämlich ein ballonartiges Aufblähen des Wandabschnitts der Flasche zu verhindern. Bei einer zweiten Ausführungsform dieses vorbeschriebenen Verfahrens verzichtet man auf das becherartige Halteteil. Bei dieser Abänderung kann man aber nur solche Körper herstellen die sich durch noch geringere Durchmesseränderungen auszeichnen als dies bei der geschilderten ersten Ausführungsform der Fall ist, verbunden mit noch größeren Krümmungsradien der Körperquerschnitte. Dosenunterteile lassen sich nach diesen beiden bekannten Verfahren nicht herstellen, weil man Dosen wegen der geforderten Maßhaltigkeit nicht aus Kunststoffen mit elastomeren Anteilen herstellen kann. Auch lassen sich, wie bereits erwähnt, nach diesen beiden bekannten Verfahren nur solche Kunststoffkörper spritzen, die — über ihre Länge gesehen — verhältnismäßig geringe Durchmesseränderungen sowie verhältnismäßig große Krümmungsradien aufweisen.

Der Erfindung liegt die Aufgabe zugrunde, ein Verfahren der eingangs genannten Art vorzuschlagen, mit dem Dosenunterteile im bewährten Spritzgußverfahren mit starrem Kern bei geringem Materialverbrauch und kurzen Zykluszeiten hergestellt werden können.

Zur Lösung dieser Aufgabe ist die Erfindung dadurch gekennzeichnet, daß man das Dosenunterteil aus Polypropylen im Spritzgußverfahren in einen Formhohlraum mit starrem Kern einspritzt, wobei der Formhohlraum im Bereich der Stufe eine Hinterschneidung hat, die einen spitzen Winkel mit der Längsachse des Dosenunterteils einschließt, deren Tiefe bis etwa 8 % des größten Durchmessers des Dosenunterteils beträgt, worauf man nach dem Abkühlen des Kunststoffmaterials das Dosenunterteil vom starren Kern unter Dehnung der Wandung des Dosenunterteils im Bereich des Gewinde- oder Steckabschnitts einschließlich der Hinterschneidung abstreift, worauf das Material des Dosenunterteils wieder in seine Ausgangsform zurückgeht.

Die Vorteile des nach diesem Verfahren hergestellten Dosenunterteils bestehen in einem sehr geringen Materialverbrauch, der — verglichen mit dem eingangs diskutierten vergleichbaren Behälter, hergestellt im Spritzgußverfahren mit einem starren Kern — um bis zu 50 % geringer ist. Dementsprechend kürzer sind auch die Zykluszeiten, so daß die Herstellungskosten insgesamt fühlbar erniedrigt werden. Die Wandung des Dosenunterteils hat eine im wesentlichen gleichbleibende Dicke, die nur im Bereich der Stufe etwas größer ist und disen Bereich dadurch versteift. Durch die angegebenen Merkmale hat die Wand des Behälters eine Flexibilität derart, daß das Formteil trotz der Hinterschneidung nach dem Spritzvorgang ohne Beschädigung entformt werden kann. Die insbesondere für den Gewinde- oder Steckabschnitt sowie für den glatten Übergang der Außenflächen des Dosenunterteils und des Deckels erforderliche Stufe kann trotzdem ausgeführt werden. Der angegebene spitze Winkel erleichtert das Herausziehen des starren Kerns aus der Form, wobei sich das Material im Bereich des Gewinde- oder Steckabschnitts ausreichend ohne Beschädigungen dehnen kann, weil es aus Polypropylen besteht. Es nimmt dann seine Ausgangsform wieder ein. Außerdem hat Polypropylen den Vorteil einer guten Maßhaltigkeit und ist diffusionsundurchlässig.

Die Erfindung wird im folgenden anhand eines Ausführungsbeispiels näher erläutert, aus dem sich weitere wichtige Merkmale ergeben.

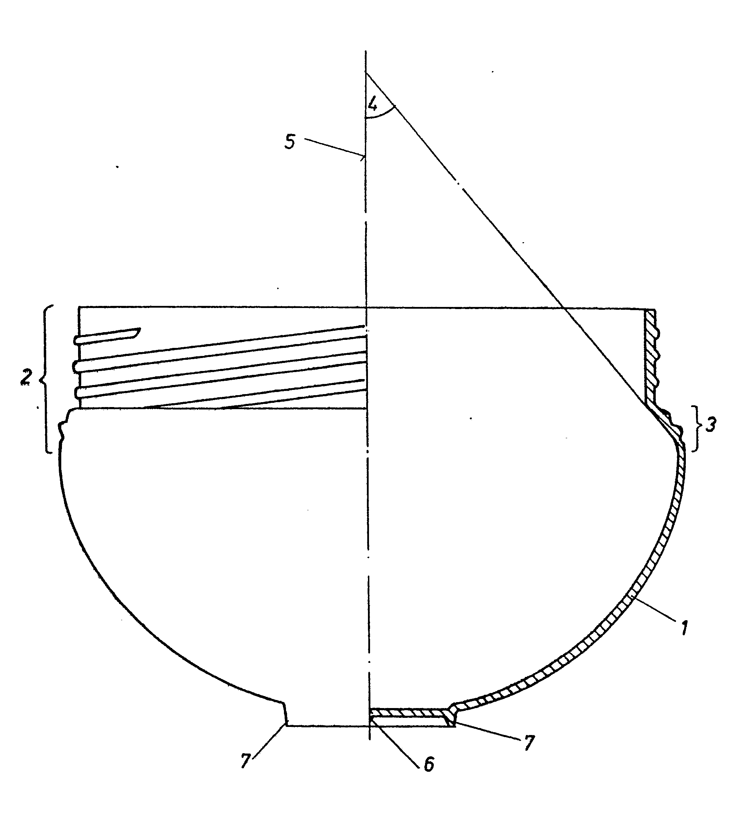

Die Figur zeigt als Anwendungsbeispiel ein Dosenunterteil, wobei die rechte Hälfte des Behälters geschnitten ist.

Das dargestellte Dosenunterteil hat eine relativ dünne Wandung 1, beispielsweise in einer Stärke von 2 mm oder weniger. Am oberen Ende ist ein Gewindeabschnitt 2 vorgesehen. Statt dessen kann auch ein Steckabschnitt ausgebildet sein. Nach unten anschließend an diesen Abschnitt 2 verbreitert sich die Außenrand in einer Stufe 3, wobei die Wandstärke im wesentlichen gleich bleibt. Im Bereich dieser Stufe 3 schlieaßt die Wand einen bei Pos. 4 angedeuteten spitzen Winkel mit der Längsachse (Symmetrieachse) 5 des Behälters ein. Bei Pos. 6 ist ein Angußpunkt zu sehen. Der Behälter steht auf einem umlaufenden Rand 7.

Bei der Herstellung des Behälters im Spritzgußverfahren mit einem starren Kern wird das Polypropylen in den Formhohlraum eingespritzt. Nach Beendigung der Kühlzeit wird das Teil durch Druckluft von Kern abgeworfen, oder durch einen oder mehrere am Boden des Kerns befindliche Auswerfer vom Kern abgezogen ; oder auch in Kombinationen von diesen Möglichkeiten untereinander entformt.

Das Entformen kann auch unterstützt werden durch einen Abstreifring oder durch Ausstoßstifte am oberen Rand.

Die Wandstärke ist so schwach gewählt, daß sich die Wandung beim Entformen überdehnt und daher schadlos vom Kern getrennt werden kann. Der den Gewindeabschnitt 2 (oder Steckrand) des Teiles ausbildende äußere Teil der Spritzform ist zweiteilig ausgebildet. Er wird geöffnet, bevor der Spritzling von dem Kern abgezogen wird. Zwar entsteht dadurch im Gewindeabschnitt 2 an der Außenfläche eine Naht, die aber bei geschlossener Dose nicht sichtbar ist und daher nicht stört.

## Patentanspruch

Verfahren zur Herstellung eines einstückigen Dosenunterteils aus Kunststoff im Spritzgußverfahren, das am Außenrand einen Gewinde- oder Steckabschnitt (2) hat, der gegenüber dem daran nach unten anschließenden Teil des Dosenunterteils über eine stufe nach innen zurückspringt, die einen glatten Übergang zwischen den Außenflächen des Dosenunterteils sowie eines zugehörigen Deckels ermöglicht, dadurch gekennzeichnet, daß man das Dosenunterteil (1) aus Polypropylen im Spritzgußverfahren in einen Formhohlraum mit starrem Kern einspritzt, wobei der Formhohlraum im Bereich der Stufe eine Hinterschneidung (3) hat, die einen spitzen Winkel (4) mit der Längsachse (5) des Dosenunterteils (1) einschließt, deren Tiefe bis etwa 8 % des größten Durchmessers des Dosenunterteils beträgt, worauf man nach dem Abkühlen des Kunststoffmaterials das Dosenunterteil vom starren Kern unter Dehnung der Wandung des Dosenunterteils (1) im Bereich des Gewinde- oder Steckabschnitts (2) einschließlich der hinterschneidung abstreift, worauf das Material des Dosenunterteils (1) wieder in seine Ausgangsform zurückgeht.

## Claim

Injection moulding process for producing the integral lower part of a plastics container having, on the outer rim, a screw-threaded or plug-in portion (2) which jumps back inwards relative to the section of the container lower part directly below it via a step which provides a smooth transition between the outer faces of the container lower part and an associated lid, characterised in that the polypropylene container lower part (1) is injecton moulded into a mould cavity having a rigid core, the mould cavity having, in the region of the step, an undercut (3) which encloses an acute angle (4) with the longitudinal axis (5) of the container lower part (1), the depth of the undercut being up to about 8 % of the greatest diameter of the container lower part, then, once the plastics material has cooled, the container lower part is stripped ·from the rigid core by stretching the wall of the container lower part (1) in the region of the screw-threaded or plug-in portion (2) including the undercut, after which the material of the container lower part (1) returns to its original shape.

## Revendication

Procédé de moulage par injection d'une partie

**0 056 495**

inférieure d'une seule pièce d'une boîte en matière plastique qui présente sur son bord extérieur une partie filetée ou une emboîture (2) qui rentre vers l'intérieur par rapport à la partie qui lui fait suite vers le bas, en faisant un gradin qui permet une transition sans décrochement entre les surfaces extérieures de ladite partie inférieure de boîte et d'un couvercle associé, caractérisé par le fait qu'on injecte la partie inférieure de boîte (1) en polypropylène dans une cavité de moule avec noyau rigide, la cavité de moule présentant dans la zone du gradin une contredépouille (3) qui fait un angle aigu (4) avec l'axe longitudinal (5) de la partie inférieure de boîte (1) et dont la profondeur maximale est d'environ 8 % du diamètre maximal de la partie inférieure de boîte, après quoi, après le refroidissement de la matière plastique, on éjecte la partie inférieure de boîte du noyau rigide avec dilatation de la paroi de la partie inférieure de boîte (1) dans la zone de la partie filetée ou de l'emboîture (2), y compris la contredépouille, après quoi la matière de la partie inférieure de boîte (1) reprend sa forme initiale.